# EUROPÄISCHE PATENTSCHRIFT

(11) **EP 1 840 262 B1**
(45) Veröffentlichungstag und Bekanntmachung des Hinweises auf die Patenterteilung: **09.11.2011**
(21) Anmeldenummer: 07013736.9
(22) Anmeldetag: 31.03.2006
(51) Int. Cl.: D21G 1/02, F16C 13/00

(54) **Verfahren zur Herstellung einer Walze**
Method for manufacturing a cylinder
Procédé de fabrication d'un cylindre

(30) Priorität: 29.08.2005 DE 102005040868
(43) Veröffentlichungstag der Anmeldung: 03.10.2007
(62) Teilanmeldung aus: 06112060.6
(73) Patentinhaber: Voith Patent GmbH, 89522 Heidenheim (DE)
(72) Erfinder: Baumeister, Thomas, 47918 Tönisvorst (DE); Conrad, Hans-Rolf, 41539 Dormagen (DE); Wiemer, Peter, Dr. rer. nat., 41532 Korschenbroich (DE); Löffler, Christian, 47608 Geldern (DE); Autrata, Jochen, 47506 Neukirchen-Vlyun (DE); Linder, Heiko, 47506 Neukirchen-Vluyn (DE); Dries, Olaf, 40882 Ratingen (DE); Eßling, Andreas, 46395 Bocholt (DE); Beckers, Ralf, 47906 Kempen (DE); Michelkens, Franz-Josef, 47929 Grefrath (DE)
(74) Vertreter: Manitz, Finsterwald & Partner GbR

(56) Entgegenhaltungen:
- EP-A- 1 529 877
- WO-A-99/58761
- WO-A-03/067106
- WO-A-03/076714

## Beschreibung

Die Erfindung betrifft ein Verfahren der im Oberbegriff des Anspruchs 1 angegebenen Art. Dabei kann es sich bei der Walze insbesondere um eine Biegeeinstellw8lze mit einer glatten, harten Oberfläche zur Herstellung und/oder Behandlung einer Faserstoffbahn, insbesondere Papier-, Karton- oder Tissuebahn, handeln. Ein Verfahren dieser Art ist aus der WO 03/076714 A2 bekannt.

Bisher wurden als harte Walzen mit besonders glatter Oberfläche nur Hartgusswalzen oder geschmiedete und induktiv gehärtete Stahlwalzen eingesetzt. Diese Walzentypen sind relativ teuer und nur in bestimmten, d.h. relativ großen Abmessungen auf dem Markt erhältlich. Zudem sind diese Walzen in der Regel mit relativ großen Eigenspannungsproblemen behaftet. Überdies wäre eine höhere Verschleißfestigkeit dieser Walzen erwünscht.

Ein weiterer Nachteil der herkömmlichen Durchbiegungseinstellwalzen besteht darin, dass im Fall einer jeweiligen Beschädigung eine Hartgusswalze nur abgedreht werden kann.

Neben Hartgusswalzen und gehärteten Stahlwalzen ist auch Chromguss (KSTV) im Einsatz. Chromguss hat den Nachteil, dass das Material durchgehärtet ist, obwohl die Härte nur an der Oberfläche benötigt wird, wodurch ein solcher Mantel anfälliger gegen stoßartige Belastungen wird und zudem die Fertigung enorm aufwändig wird. Es gibt Mindestwandstärken seitens des Herstellers.

Hartgusswalzen haben relativ große fertigungsbedingte Mindestwandstärken, was ein Nachteil für eine Zonenprofilierungswalze ist, da Zonenreaktionen im Nip umso effektiver sind, je dünnwandiger ein Mantel ist.

Beispielsweise bei Rädern von Schienenfahrzeugen und Stahlwalzwerken ist bereits die Anwendung einer so genannten "Panzerschweißung" bekannt.

Bei der aus der WO 03/076714 A2 bekannten beheizbaren Walze können bestimmte Eigenschaften der Walzenoberfläche wie z.B. die Härte und die Wärmeleitfähigkeit in Maschinenquerrichtung variieren.

Der Erfindung liegt die Aufgabe zugrunde, ein verbessertes Verfahren der eingangs genannten Art zu schaffen, bei dem die zuvor genannten Nachteile beseitigt sind.

Diese Aufgabe wird erfindungsgemäß dadurch gelöst, dass die Schweißschicht mit einer ausgehend vom Grundmantel radial nach außen zunehmenden Härte erzeugt wird und dass mit der Schweißschicht eine Oberflächenhärte nach Vickers ≥ 600, insbesondere ≥ 700, insbesondere ≥ 750 und vorzugsweise von etwa 800 HV erzeugt wird.

Der Walzenmantel kann somit aus einem relativ einfachen schweißbaren Stahl bestehen, auf den eine die gewünschten Eigenschaften besitzende Schicht aufgeschweißt wird. Die Eigenspannungen in der Walze werden reduziert. Die konstante Härteschichtdicke sorgt für eine bessere Formstabilität der Walze. Auch bei induktiv gehärteten Schmiedestahlwalzen lässt sich die Härtetiefe zwar genau festlegen, hier kommt es jedoch zu einem Eigenspannungspeak beim Übergang zwischen gehärteter zu ungehärteter Schicht.

Ein weiterer entscheidender Vorteil besteht in sich ergebenden verbesserten Reparaturmöglichkeiten. So kann die Walze nach einer jeweiligen Beschädigung durch erneutes Auftragschweißen repariert werden. Demgegenüber kann eine beschädigte Hartgusswalze für eine entsprechende Reparatur nur abgedreht werden.

Zudem kann Gewicht eingespart werden, so dass beispielsweise in einem Kalander erforderlichenfalls wesentlich niedrigere Streckenlasten gefahren werden können. Bei mehreren übereinander angeordneten Walzen wird die sich aufgrund des darüber befindlichen Walzengewichts ergebende Streckenlast im untersten Nip geringer, was zur Folge hat, dass man bei gleicher limitierter maximaler Streckenlast im untersten Nip im obersten Nip bereits viel höhere Lasten fahren kann.

Dabei umfasst die Wärmebehandlung bevorzugt eine Glühbehandlung.

Die über die nachträgliche Wärmebehandlung einstellbaren Werkstoffeigenschaften umfassen vorteilhafterweise die Zähigkeit, die Gefügestruktur, die Formstabilität, die Eigenspannung, die Härte und/oder dergleichen.

Es kann also beispielsweise ein Stahlgrundmantel mit einer harten Auftragsschweißschicht versehen und der so beschichtete Walzenmantel einer anschließenden Wärmebehandlung unterzogen werden.

Bevorzugt wird auf den Grundmantel aus schweißbarem Stahl zumindest wieder eine Schweißschicht aufgebracht, die eine größere Härte besitzt als der Grundmantel.

Die Schweißschicht ist bevorzugt in Verbindung mit einer Wolframcarbidschicht vorgesehen.

Weitere bevorzugte Ausgestaltungen des erfindungsgemäßen Verfahrens sind in den Unteransprüchen angegeben.

Die Schweißschicht besteht vorzugsweise aus einer mit dem Grundmantel verschweißbaren Metalllegierung. Grundsätzlich können alle mit dem Grundmantel verschweißbaren Metalllegierungen aufgebracht werden.

Zweckmäßigerweise ist die Schweißschicht spiralförmig auf dem Grundmantel aufgebracht. Die Schicht kann also beispielsweise bei sich drehendem Grundmantel aufgeschweißt werden.

Während die üblichen Hartgusswalzen Härten von etwa 530 HV besitzen, sind mit der erfindungsgemäßen Schweißschicht Härten bis zu 800 HV nach Vickers denkbar.

Die Schweißschicht kann durch eine oder auch durch mehrere Schweißlagen gebildet sein.

Die bevorzugte Dicke für eine jeweilige Schweißlage liegt bei etwa 3 mm.

Zweckmäßigerweise liegt die Gesamtdicke der Schweißschicht nach der Endbearbeitung in einem Bereich von etwa 1 bis etwa 20 mm, vorzugsweise in einem Bereich von etwa 3 bis etwa 10 mm.

Da eine sich schweißende Metalllegierung relativ frei bestimmbare Bestandteile besitzt, lassen sich daraus die physikalischen und chemischen Eigenschaften der Schweißschicht bzw. deren Lagen in der gewünschten Weise variabel einstellen. Indem die Härte ausgehend vom zähen Grundmantel radial nach außen zunimmt, werden Eigenspannungen reduziert.

Der Walzenmantel ist bevorzugt über wenigstens ein Stützelement drehbar auf einem drehfesten Joch abgestützt. Dabei kann über die entsprechenden Stützelemente insbesondere auch eine Zonenprofilsteuerung der Walze vorgesehen sein.

Von besonderem Vorteil ist, wenn der Grundmantel durch ein rundgebogenes Blech, zweckmäßigerweise ein längsnahtgeschweißtes Blech gebildet ist. Dabei kann vorteilhafterweise ein relativ dünnes Blech verwendet werden. So kann der Grundmantel beispielsweise eine Stärke in einem Bereich von etwa 4 bis etwa 8 % des Walzeninnendurchmessers besitzen. Beispielsweise bei einem Innendurchmesser von 900 mm würde die Mantelstärke also in einem Bereich von 36 bis 72 mm und bei einem Innendurchmesser von z.B. 400 mm in einem Bereich von 16 bis 32 mm liegen.

Derartige, beispielsweise einen Grundmantel aus rundgebogenem Blech aufweisende Walzenmäntel mit einer aufgeschweißten harten Schicht eignen sich in idealer Weise beispielsweise für eine Zonenprofilsteuerung über in der Walze vorgesehene Stützelemente. Mit Hartguss würde man nie entsprechend elastische dünne Mantelwandstärken erreichen. Zudem ist aufgrund der erfindungsgemäßen Lösung der Walzendurchmesser individuell an den jeweiligen Einzelfall anpassbar. Es besteht also keine Abhängigkeit mehr von Kokillengrößen. Schließlich entfallen die für die bisherigen Walzen üblichen langen Beschaffungszeiten.

Auf den Grundmantel aus schweißbarem Stahl kann zumindest eine Schweiß schicht aufgebracht werden, die eine größere Härte besitzt als der Grundmantel.

Das Aufschweißen der Schweißschicht erfolgt bevorzugt unter Pulver oder unter Schutzgas und durch eine Materialzugabe in Form wenigstens eines Bandes oder Drahtes.

Wie bereits erwähnt, kann die Schweißschicht vorteilhafterweise bei sich drehendem Grundmantel spiralförmig aufgebracht werden.

Die Erfindung schafft ein Verfahren zur Herstellung einer Walze für den Einsatz bei der Papierherstellung, also ein Verfahren, das nicht nur zur Herstellung einer Biegeeinstellwalze, sondern allgemein auch für andere insbesondere für den Einsatz bei der Papierherstellung vorgesehene Walzen, also beispielsweise auch eine beheizte Walze usw. geeignet ist.

Soweit hier von einer glatten Oberfläche die Rede ist, ist diese bevorzugt durch einen Rauigkeitswert Ra in einem Bereich von etwa 0,01 bis etwa 0,2 µm definiert.

## Patentansprüche

1. Verfahren zur Herstellung einer Walze für den Einsatz bei der Papierherstellung, bei dem auf einen Grundmantel aus schweißbarem Stahl zumindest eine Schweißschicht aufgebracht wird und die endgültigen Werkstoffeigenschaften der durch die Schweißschicht aufgebrachten Beschichtung nach dem Schweißauftrag durch eine entsprechende Wärmebehandlung eingestellt werden,
**dadurch gekennzeichnet,**
**dass** die Schweißschicht mit einer ausgehend vom Grundmantel radial nach außen zunehmenden Härte erzeugt wird und dass mit der Schweißschicht eine Oberflächenhärte nach Vickers ≥ 600 HV, insbesondere ≥ 700 HV, insbesondere ≥ 750 HV und vorzugsweise von etwa 800 HV, erzeugt wird.

2. Verfahren nach Anspruch 1,
**dadurch gekennzeichnet,**
**dass** die Wärmbebehandlung eine Glühbehandlung umfasst.

3. Verfahren nach Anspruch 1 oder 2,
**dadurch gekennzeichnet,**
**dass** die über die nachträgliche Wärmebehandlung einstellbaren Werkstoffeigenschaften die Zähigkeit, die Gefügestruktur, die Formstabilität, die Eigenspannung, die Härte und/oder dergleichen umfassen.

4. Verfahren nach einem der Ansprüche 1 bis 3,
**dadurch gekennzeichnet,**
**dass** auf den Grundmantel aus schweißbarem Stahl zumindest eine Schweißschicht aufgebracht wird, die eine größere Härte besitzt als der Grundmantel.

5. Verfahren nach einem der vorhergehenden Ansprüche,
**dadurch gekennzeichnet,**
**dass** die Schweißschicht in Verbindung mit einer Wolframcarbidschicht vorgesehen ist.

6. Verfahren nach einem der vorhergehenden Ansprüche,
**dadurch gekennzeichnet,**
**dass** zur Herstellung einer mit einer glatten, harten Oberfläche versehenen Biegeeinstellwalze auf den Grundmantel aus schweißbarem Stahl zumindest eine Schweißschicht aufgebracht wird, die eine größere Härte besitzt als der Grundmantel.

7. Verfahren nach Anspruch 6,
**dadurch gekennzeichnet,**
**dass** das Aufschweißen der Schweißschicht unter Pulver oder unter Schutzgas und durch eine Materialzugabe in Form wenigstens eines Bandes oder Drahtes erfolgt.

8. Verfahren nach Anspruch 6 oder 7,
**dadurch gekennzeichnet,**
**dass** die Schweißschicht durch eine mit dem Grundmantel verschweißbare Metalllegierung gebildet wird.

9. Verfahren nach einem der vorhergehenden Ansprüche 6 bis 8,
**dadurch gekennzeichnet,**
**dass** die Schweißschicht bei sich drehendem Grundmantel spiralförmig aufgebracht wird.

10. Verfahren nach einem der vorhergehenden Ansprüche 6 bis 9,
**dadurch gekennzeichnet,**
**dass** die Schweißschicht kontinuierlich durch eine Umfangsschweißung, anschließend einen Seitenschritt um eine Schweißnahtbreite, anschließend eine weitere Umfangsschweißung, usw. auf den Grundmantel aufgebracht wird.

11. Verfahren nach einem der vorhergehenden Ansprüche 6 bis 10,
**dadurch gekennzeichnet,**
**dass** die Schweißschicht durch wenigstens zwei Schweißlagen gebildet wird.

12. Verfahren nach Anspruch 11,
**dadurch gekennzeichnet ,**
**dass** die Dicke einer jeweiligen Schweißlage etwa 3 mm gewählt wird.

13. Verfahren nach einem der vorhergehenden Ansprüche 6 bis 12,
**dadurch gekennzeichnet,**
**dass** die Gesamtdicke der Schweißschicht nach der Endbearbeitung in einem Bereich von etwa 1 bis etwa 20 mm, vorzugsweise in einem Bereich von etwa 3 bis etwa 10 mm gewählt wird.

14. Verfahren nach Anspruch 6 und einem der Ansprüche 6 bis 13,
**dadurch gekennzeichnet ,**
**dass** der Grundmantel durch ein rundgebogenes Blech gebildet wird.

15. Verfahren nach Anspruch 6 und einem der Ansprüche 7 bis 14,
**dadurch gekennzeichnet,**
**dass** der Grundmantel durch ein längsnahtgeschweißtes Blech gebildet wird.

16. Verfahren nach einem der vorhergehenden Ansprüche,
**dadurch gekennzeichnet,**
**dass** der Grundmantel mit einer Stärke in einem Bereich von etwa 4 bis etwa 8 % eines Walzeninnendurchmessers gefertigt wird.

## Claims

1. A method of manufacturing a roll for use in paper making, wherein at least one welding layer is applied to a base jacket of weldable steel and the final material properties of the coating applied by said welding layer are set by a corresponding thermal treatment after the weld application,
**characterised in that**
the weld layer is produced with a hardness increasing radially outwardly starting from the base jacket and that a Vickers hardness ≥ 600 HV, in particular ≥ 700 HV, in particular ≥ 750 HV, and preferably of approximately 800 HV, is produced by the welding layer.

2. A method in accordance with claim 1,
**characterised in that**
the thermal treatment is annealing.

3. A method in accordance with claim 1 or claim 2,
**characterised in that**
the material properties adjustable by the subsequent thermal treatment include the toughness, the texture structure, the shape stability, the internal stress, the hardness and/or the like.

4. A method in accordance with any one of the claims 1 to 3,
**characterised in that**
at least one welding layer is applied to the base jacket of weldable steel and has a greater hardness than the base jacket.

5. A method in accordance with any one of the preceding claims,
**characterised in that**
the welding layer is provided in conjunction with a tungsten carbide layer.

6. A method in accordance with any one of the preceding claims,
**characterised in that**
at least one welding layer which has a greater hardness than the base jacket is applied to the base jacket of weldable steel for the manufacture of a deflection controlled roll provided with a smooth, hard surface.

7. A method in accordance with claim 6,
**characterised in that**
the welding on of the welding layer takes place under powder or under an inert gas and by a material addition in the form of at least one band or wire.

8. A method in accordance with claim 6 or claim 7,
**characterised in that**
the welding layer is formed by a metal alloy weldable to the base material.

9. A method in accordance with any one of the preceding claims 6 to 8,
**characterised in that**
the welding layer is applied in spiral form with a rotating base jacket.

10. A method in accordance with any one of the preceding claims 6 to 9,
**characterised in that**
the welding layer is applied continuously by a circumferential welding, subsequently by a side step about a weld seam width, subsequently by a further circumferential welding, etc. onto the base jacket.

11. A method in accordance with any one of the preceding claims 6 to 10,
**characterised in that**
the welding layer is formed by at least two welding coats.

12. A method in accordance with claim 11,
**characterised in that**
the thickness of a respective welding coat is selected as approximately 3 mm.

13. A method in accordance with any one of the preceding claims 6 to 12,
**characterised in that**
the total thickness of the weld layer after the end processing is selected in a range from approximately 1 to approximately 20 mm, preferably in a range from approximately 3 to approximately 10 mm.

14. A method in accordance with claim 6 and any one of the claims 6 to 13,
**characterised in that**
the base jacket is formed by a round-curved metal sheet.

15. A method in accordance with claim 6 and any one of the claims 7 to 14,
**characterised in that**
the base jacket is formed by a longitudinal seam-welded metal sheet.

16. A method in accordance with any one of the preceding claims,
**characterised in that**
the base jacket is produced with a thickness in a range from approximately 4 to approximately 8% of an inner diameter of a roll.

## Revendications

1. Procédé pour la fabrication d'un cylindre destiné à être utilisé pour la production de papier, dans lequel on rapporte sur une enveloppe de base en acier capable d'être soudé au moins une couche soudée et les propriétés définitives du matériau de la couche rapportée par la couche soudée sont établies par un traitement thermique correspondant après l'apport par soudure,
**caractérisé en ce que** la couche soudée est engendrée avec une dureté qui augmente radialement vers l'extérieur en partant de l'enveloppe de base, et **en ce que** l'on engendre avec la couche soudée une dureté Vickers de surface ≥ 600 HV, en particulier ≥ 700 HV, en particulier > 750 HV, et de préférence environ 800 HV.

2. Procédé selon la revendication 1,
**caractérisé en ce que** le traitement thermique comprend un traitement de recuit.

3. Procédé selon la revendication 1 ou 2,
**caractérisé en ce que** les propriétés du matériau qui peuvent être établies grâce au traitement thermique postérieur comprennent la ténacité, la structure de texture, la stabilité de forme, la contrainte résiduelle, la dureté et/ou similaires.

4. Procédé selon l'une des revendications 1 à 3,
**caractérisé en ce que** l'on rapporte sur l'enveloppe de base en acier capable d'être soudée au moins une couche soudée qui possède une dureté plus élevée que l'enveloppe de base.

5. Procédé selon l'une des revendications précédentes,
**caractérisé en ce que** la couche soudée est prévue en liaison avec une couche de carbure de tungstène.

6. Procédé selon l'une des revendications précédentes,
**caractérisé en ce que** pour la réalisation d'un cylindre à flexion réglable pourvu d'une surface dure et lisse, on rapporte sur l'enveloppe de base en acier capable d'être soudé au moins une couche soudée qui possède une dureté plus élevée que l'enveloppe de base.

7. Procédé selon la revendication 6,
**caractérisé en ce que** l'application par soudure de la couche soudée a lieu sous de la poudre ou sous un gaz protecteur, et par un apport de matériau sous la forme d'au moins une bande ou un fil.

8. Procédé selon la revendication 6 ou 7,
**caractérisé en ce que** la couche soudée est formée d'un alliage de métal capable d'être soudé avec l'enveloppe de base.

9. Procédé selon l'une des revendications précédentes 6 à 8,
**caractérisé en ce que** la couche soudée est rapportée en forme de spirale alors que l'enveloppe de base est en rotation.

10. Procédé selon l'une des revendications précédentes 6 à 9,
**caractérisé en ce que** la couche soudée est rapportée en continu par un soudage périphérique, suivi d'un saut latéral à raison de la largeur d'un cordon de soudure, suivi d'un autre soudage périphérique, et ainsi de suite, sur l'enveloppe de base.

11. Procédé selon l'une des revendications précédentes 6 à 10,
**caractérisé en ce que** la couche soudée est formée par au moins deux nappes soudées.

12. Procédé selon la revendication 11,
**caractérisé en ce que** l'épaisseur d'une nappe soudée respective est choisie d'environ 3 mm.

13. Procédé selon l'une des revendications précédentes 6 à 12,
**caractérisé en ce que** l'épaisseur totale de la couche soudée après usinage final est choisie dans une plage d'environ 1 à environ 20 mm, de préférence dans une plage d'environ 3 jusqu'à environ 10 mm.

14. Procédé selon la revendication 6 et l'une des revendications 7 à 13,
**caractérisé en ce que** l'enveloppe de base est formée par une tôle cintrée en rond.

15. Procédé selon la revendication 6 et l'une des revendications 7 à 14,
**caractérisé en ce que** l'enveloppe de base est formée par une tôle soudée avec un cordon de soudure longitudinal.

16. Procédé selon l'une des revendications précédentes,
**caractérisé en ce que** l'enveloppe de base est réalisée avec une épaisseur dans une plage d'environ 4 à environ 8 % d'un diamètre intérieur du cylindre.
